# EUROPÄISCHE PATENTANMELDUNG

(11) **EP 3 404 211 A1**
(43) Veröffentlichungstag der Anmeldung: **21.11.2018**
(21) Anmeldenummer: 17171145.0
(22) Anmeldetag: 15.05.2017
(51) Int. Cl.: F01D 5/14

(54) **SCHAUFELGITTERSEGMENT FÜR EINE TURBINE MIT KONTURIERTER PLATTFORMOBERFLÄCHE, ZUGEHÖRIGE SCHAUFELGITTER, SCHAUFELKANAL, PLATTFORM, TURBINE UND FLUGZEUGTRIEBWERK**

(71) Anmelder: MTU Aero Engines AG, 80995 München (DE)
(72) Erfinder: Brettschneider, Markus, 85757 Karlsfeld (DE); Mahle, Inga, 81669 München (DE); Maatouk, Fadi, 80807 München (DE)

(57) **Zusammenfassung**

Offenbart wird ein Schaufelgittersegment (110, 120, 130, 140, 150) eines Schaufelgitters für eine Niederdruckturbine, das eine Plattform (10) mit einer Plattformoberfläche sowie mindestens zwei Schaufelblätter (20, 30) umfasst. Die Schaufelblätter bestimmen dabei durch ihre jeweiligen An- und Abströmkanten (23, 33, 24, 34) auf einer Plattformoberfläche einen Schaufelzwischenstreifen (Z) mit axialer Gitterbreite (g). In einer stromab liegenden Hälfte des Schaufelzwischenstreifens (Z) weist die Plattformoberfläche eine Erhebung (111, 121, 131, 141, 151) auf, die sich von der Druckseite (21) eines ersten der Schaufelblätter (20) bis zur Saugseite (32) eines zweiten der Schaufelblätter (30) erstreckt.

Offenbart sind ferner ein Schaufelgitter, ein Schaufelkanal, eine Niederdruckturbine und ein Flugzeugtriebwerk.

## Beschreibung

Die vorliegende Erfindung betrifft ein Schaufelgittersegment, ein Schaufelgitter, eine Plattform für ein Schaufelgittersegment, einen Schaufelkanal einer Strömungsmaschine, eine Turbine sowie ein Flugzeugtriebwerk.

Eine Turbine (als die in dieser Schrift nicht eine Strömungsmaschine als Ganzes, sondern ein Expander zu verstehen ist, der in einer Strömungsmaschine einem Verdichter nachgelagert ist bzw. wird) weist (insbesondere im Bereich einer enthaltenen Niederdruckturbine) regelmäßig einen Strömungskanal zur Durchführung eines Fluids auf. Der Strömungskanal, der auch als "Ringraum" bezeichnet wird, ist nach radial innen durch radial innere Seitenwände begrenzt und nach radial außen durch radial äußere Seitenwände; die Bezeichnungen "radial" ebenso wie "axial" und "Umfangsrichtung" sowie davon abgeleitete Begriffe sind in dieser Schrift - sofern nichts anderes angegeben ist - stets in Bezug auf eine Rotationsachse des Rotors zu verstehen.

Im Ringraum einer (Niederdruck-)Turbine sind Schaufelgitter angeordnet (für die auch die Bezeichnung "Schaufelkranz" üblich ist). Sie umfassen jeweils Leit- und/oder Laufschaufeln, die in Umfangsrichtung in im Wesentlichen regelmäßigen Abständen hintereinanderliegen, sowie zugehörige Plattformen, die auch als "Deckbänder" bezeichnet werden und die jeweils eine anströmseitige und eine abströmseitige Plattformkante aufweisen. Diese Plattformkanten begrenzen die Plattformoberfläche in axialer Richtung; als "Plattformoberfläche" wird dabei in dieser Schrift die den Schaufeln (bzw. Schaufelblättern) zugewandte Oberfläche der Plattform bezeichnet.

Der Rand der Plattform, den der im Betrieb durch den Ringraum der Strömungsmaschine führende (axiale) Hauptstrom zuerst passiert, wird in dieser Schrift "anströmseitige" Plattformkante genannt; als "abströmseitige" Plattformkante wird entsprechend der andere Rand bezeichnet. Die Angaben "stromab" bzw. "stromauf" beziehen sich entsprechend auf die axiale Hauptstromrichtung und dabei lediglich auf die axiale Position, also ungeachtet einer möglichen Verschiebung in Umfangsrichtung: Insbesondere ist ein Punkt in dieser Schrift als "stromab der Anströmkanten" (oder stromab eines anderen Punktes) liegend zu verstehen, wenn er im Vergleich zu einer direkten Verbindung der Anströmkanten (miteinander) an der Plattformoberfläche (bzw. im Vergleich zum anderen Punkt) axial in/mit Hauptstromrichtung (also ihr folgend) versetzt angeordnet ist; Analoges gilt für die Bezeichnung "stromauf" (mit entgegengesetzter Richtung).

Der Abschnitt der Plattformoberfläche, der in axialer Richtung durch die direkten (d.h. in Umfangsrichtung ohne axiale Abweichungen verlaufenden) Verbindungen der Anströmkanten bzw. der Abströmkanten benachbarter Schaufelblätter an der Plattformoberfläche begrenzt ist und in Umfangsrichtung durch die Saugseite des einen und die Druckseite des anderen Schaufelblattes, wird in dieser Schrift als "Schaufelzwischenstreifen" bezeichnet. Die Breite des Schaufelzwischenstreifens in Umfangsrichtung wird "Teilungsabstand" des Schaufelgitters genannt. Er kann insbesondere als Abstand der Anströmkanten jeweils benachbarter Schaufeln in Umfangsrichtung im Bereich der Plattformoberfläche gemessen werden. Der in Richtung des vorgesehenen axialen Hauptstroms gemessene Abstand der Anströmkanten der Schaufelblätter von ihren Abströmkanten wird (axiale) "Gitterbreite" genannt.

Die Druckseite einer Schaufel und die Saugseite einer benachbarten Schaufel begrenzen in Umfangsrichtung jeweils einen sogenannten Schaufelkanal. In radialer Richtung wird dieser Schaufelkanal innerhalb der Turbine durch sogenannte Seitenwände begrenzt. Diese werden durch radial innere, nabenseitige und/oder radial äußere, gehäuseseitige Plattformen gebildet. Im Folgenden kann sich "Plattform" auf eine radial innere und/oder äußere Plattform beziehen.

Eine durch einen Strömungskanal geführte Fluidströmung wird regelmäßig durch die Oberflächen der Seitenwände beeinflusst. Strömungsschichten, die nahe an diesen Oberflächen verlaufen, werden dabei aufgrund ihrer geringeren Geschwindigkeit stärker abgelenkt als von den Seitenwänden fernere Strömungsschichten. So entsteht eine Sekundärströmung, die einem axialen Hauptstrom überlagert ist und die insbesondere zu Wirbeln und Druckverlusten führt.

Zur Verringerung der Sekundärströmungen werden in die Seitenwände häufig Konturierungen in Form von Erhebungen und/oder Vertiefungen eingebracht.

Aus dem Stand der Technik ist eine Vielzahl von derartigen sogenannten "Seitenwandkonturierungen" bekannt. Insbesondere offenbart die Druckschrift EP 2 589 752 A2 eine nicht axialsymmetrische Konturierung einer inneren oder äußeren Seitenwand eines Leitschaufelkranzes. Die Konturierung umfasst dabei Bereiche, die sich in axialer Richtung und in Umfangsrichtung erstrecken und in denen die Seitenwand in radialer Richtung von einem nominalen Radius um mindestens 3% eines mittleren Abstandes von innerer und äußerer Seitenwand abweicht.

Die Druckschrift EP 1 967 694 A2 zeigt beispielsweise eine Erhebung in einer Seitenwandkonturierung für eine Strömungsmaschine, wobei ein Schaufelblatt an einer Seite teilweise auf der Erhebung fußt (d.h. ein Teil einer Grenzlinie zwischen Seitenwand und dem Schaufelblatt verläuft auf der Erhebung).

Aufgabe der vorliegenden Erfindung ist es, eine Technik bereitzustellen, mit der Sekundärströme im Ringraum einer Turbine auf vorteilhafte Weise reduziert werden können.

Die Aufgabe wird gelöst durch einen Schaufelgittersegment gemäß Anspruch 1, ein Schaufelgitter nach Anspruch 7, einen Schaufelkanal gemäß Anspruch 8, eine Plattform gemäß Anspruch 9, eine Turbine nach Anspruch 10 und ein Flugzeugtriebwerk gemäß Anspruch 11. Vorteilhafte Ausführungsformen sind in den Unteransprüchen, der Beschreibung und den Figuren offenbart.

Ein erfindungsgemäßes Schaufelgittersegment ist ein Segment eines Schaufelgitters für eine Turbine, speziell beispielsweise für eine Niederdruckturbine. Es umfasst eine Plattform mit einer Plattformoberfläche sowie mindestens zwei Schaufelblätter. Zwischen der Saugseite eines ersten und der Druckseite des zweiten der Schaufelblätter ist auf der Plattformoberfläche ein Schaufelzwischenstreifen angeordnet, dessen axiale Gitterbreite durch die An- und Abströmkanten der Schaufelblätter bestimmt ist. Die Plattformoberfläche weist eine Erhebung auf, die sich in einer stromab liegenden Hälfte des Schaufelzwischenstreifens von der Druckseite des ersten bis zur Saugseite des zweiten der Schaufelblätter erstreckt (d.h. die durchgehend von der genannten Druck- zur genannten Saugseite reicht diese Seiten berührt). Als "stromab liegende Hälfte" wird dabei hier ein Teilstreifen bezeichnet, der sich um die halbe Gitterbreite stromaufwärts der Abströmkanten der Schaufelblätter (bzw. einer Verbindung dieser Schaufelblätter) erstreckt; "halbiert" wird in diesem Sinne also axiale Ausdehnung des Schaufelzwischenstreifens.

Als "Erhebung" ist in dieser Schrift eine lokale Ausformung (wie beispielsweise ein Buckel bzw. Vorsprung) in der Plattformoberfläche zu verstehen, in der sich diese zur den Schaufelblättern zugewandten Seite hin erstreckt. Als "Vertiefung" ist (weiter unten) analog eine lokale Ausformung in der Plattformoberfläche in die andere Richtung (also zur von den Schaufelblättern abgewandten Seite hin) zu verstehen (wie z.B. eine Senke bzw. Nische).

Den Bezeichnungen "Erhebung" und "Vertiefung" (ebenso wie Begriffen wie "Höhe", "Tiefe" oder ähnlichem) liegt hier also eine Orientierung bzw. ein Koordinatensystem zugrunde, bei der/dem sich die Schaufelblätter und eine Erhebung von der Plattformoberfläche nach "oben", d.h. nach radial innen im Falle einer radial äußeren Plattform und nach radial außen im Falle einer radial inneren Plattform, erstrecken und eine Vertiefung dementsprechend in die entgegengesetzte Richtung (nach "unten") führt. Insbesondere wird dabei also der Schaufelkanal als "oberhalb" der Plattformoberfläche liegend angesehen

Ein erfindungsgemäßes Schaufelgittersegment kann eine oder mehrere Erhebung(en) mit den oben und/oder nachfolgend genannten Eigenschaften haben. Die Angabe "mindestens eine" wird im Folgenden aus Gründen der besseren Lesbarkeit zuweilen weggelassen.

Ein erfindungsgemäßes Schaufelgittersegment kann einteilig oder zusammengesetzt sein. Insbesondere kann die Plattform einteilig sein oder zwei oder mehr Teile umfassen, von denen jeweils eines der Schaufelblätter absteht, oder die Plattform kann als separates Bauteil ausgebildet sein, das zwischen den Schaufelblättern angeordnet ist oder werden kann. Entsprechend ist eine erfindungsgemäße Plattform dazu eingerichtet, in Umfangsrichtung an jeder Seite an ein Schaufelblatt anzugrenzen und mit den Schaufelblättern (von denen keines, eines oder beide fest an die Plattform angeformt sein kann) zusammen ein erfindungsgemäßes Schaufelgittersegment gemäß einer der in dieser Schrift offenbarten Ausführungsformen auszubilden.

Ein erfindungsgemäßes Schaufelgitter umfasst mindestens ein erfindungsgemäßes Schaufelgittersegment gemäß einer der in dieser Schrift offenbarten Ausführungsformen.

Ein erfindungsgemäßer Schaufelkanal führt durch ein erfindungsgemäßes Schaufelgittersegment gemäß einer der in dieser Schrift offenbarten Ausführungsformen. In Umfangsrichtung ist der Schaufelkanal durch die Druckseite eines der Schaufelblätter des Schaufelgittersegments und durch die dieser gegenüberliegende Saugseite des (benachbarten) anderen der Schaufelblätter begrenzt.

Das Schaufelgittersegment bzw. das Schaufelgitter bzw. der Strömungskanal bzw. die Plattform können insbesondere Teil einer Niederdruckturbine bzw. dazu eingerichtet sein, in einer Niederdruckturbine eingebaut bzw. verwendet zu werden. Die Schaufelblätter können jeweils Leit- oder Laufschaufelblätter sein. Die Plattform kann dazu eingerichtet sein, einen Schaufelkanal durch das Schaufelgittersegment nach radial innen oder nach radial außen zu begrenzen.

Eine erfindungsgemäße Turbine umfasst ein oder mehrere erfindungsgemäße(s) Schaufelgitter. Ein solches kann insbesondere im Bereich einer Niederdruckturbine der Turbine angeordnet sein.

Ein erfindungsgemäßes Flugzeugtriebwerk umfasst eine erfindungsgemäße Turbine. Vorzugsweise weist das Flugzeugtriebwerk darüber hinaus einen Verdichter auf.

Ein erfindungsgemäßes Schaufelgittersegment, ein erfindungsgemäßes Schaufelgitter, ein erfindungsgemäßer Schaufelkanal, eine erfindungsgemäße Plattform, eine erfindungsgemäße Turbine und ein erfindungsgemäßes Flugzeugtriebwerk beeinflussen durch die erfindungsgemäße Geometrie der Plattformoberfläche das statische Druckfeld an der Plattformoberfläche und auf die Schaufeln im Randbereich. Dadurch wird jeweils eine Reduktion der Sekundärströmung, insbesondere von Wirbeln im Schaufelkanal ermöglicht. So können Verluste verringert und die Zuströmung in ein ggf. stromab liegendes weiteres Schaufelgitter verbessert werden.

Bevorzugtermaßen liegt die mindestens eine Erhebung der Plattformoberfläche vollständig (also mit jedem ihrer Punkte) in der stromab liegenden Hälfte des Schaufelzwischenstreifens. Vorzugsweise bildet die Plattformoberfläche stromauf der Erhebung eine Kurve oder sogar einen flächigen (z.B. unkonturierten) Abschnitt aus, die/der sich (bevorzugt ebenfalls innerhalb der stromab liegenden Hälfte des Schaufelzwischenstreifens) von der Druckseite des ersten zur Saugseite des zweiten Schaufelblatts erstreckt und die/der eine Nullhöhenlinie bzw. eine Nullhöhenfläche in dem Sinne bildet, dass eine Erhebung radial oberhalb (und ggf. eine Vertiefung radial unterhalb) der Nullhöhenlinie bzw. Nullhöhenfläche liegt. Dabei wird, wie oben erwähnt, ein Schaufelkanal als "oberhalb" der Plattformoberfläche liegend angesehen.

Gemäß einer vorteilhaften Ausführungsform fußt das erste und/oder das zweite Schaufelblatt (an der Druck- bzw. Saugseite) in einem Abschnitt auf der Erhebung. Eine Grenzlinie zwischen dem jeweiligen Schaufelblatt und der Plattformoberfläche verläuft dabei also mindestens teilweise auf der Erhebung.

Als vorteilhaft haben sich Ausführungsformen der vorliegenden Erfindung erwiesen, bei denen mindestens ein höchster Punkt der Erhebung in Umfangsrichtung in einem mittleren Bereich zwischen den Schaufelblättern angeordnet ist oder in einer Umgebung des ersten oder des zweiten Schaufelblattes. Insbesondere kann ein Abstand eines derartigen höchsten Punktes der Erhebung von der Druckseite des ersten Schaufelblattes zwischen 40% und 60% des Teilungsabstandes des Schaufelgittersegments betragen und/oder mindestens ein höchster Punkt der Erhebung kann um höchstens 25%, vorzugsweise um höchstens 10%, des Teilungsabstandes von der Druckseite des ersten Schaufelblattes beabstandet sein. Schließlich kann (alternativ oder zusätzlich) mindestens ein höchster Punkt der Erhebung einen Abstand von der Druckseite des ersten Schaufelblattes haben, der wenigstens 75%, vorzugsweise wenigstens 90%, des Teilungsabstandes beträgt (so dass der höchste Punkt also in einer Umgebung des zweiten Schaufelblattes angeordnet ist. Der Abstand ist dabei jeweils als in Umfangsrichtung gemessen zu verstehen (also ohne eine (von Null verschiedene) Richtungskomponente in axialer Richtung).

Als "höchste Punkte" werden dabei in dieser Schrift die Punkte der jeweiligen Erhebung verstanden, in denen sich diese in radialer Richtung (im Vergleich zu den anderen Punkten der Erhebung) am weitesten zur der Seite hin erstreckt, an der eine der Plattform gegenüberliegende Seitenwand oder Plattform angeordnet bzw. anzuordnen ist, so dass also ein zugehöriger Schaufelkanal dort maximal lokal verengt wird. Analog sind (weiter unten) "tiefste Punkte" einer Vertiefung diejenigen Punkte, in denen sich die Vertiefung am weitesten zur anderen Seite (also weg von einer Seite, an der eine gegenüberliegende Seitenwand oder Plattform angeordnet oder anzuordnen ist) erstreckt, in denen ein zugehöriger Schaufelkanal also lokal maximal erweitert wird.

Die höchsten bzw. tiefsten Punkte können jeweils eine Kurve oder einen Flächenabschnitt ausbilden (wenn die Erhebung beispielsweise einen Rücken oder Grat bzw. ein Plateau ausbildet; Analoges gilt für eine Vertiefung) oder singulär sein. Gemäß einer exemplarischen Ausführungsform weist die Erhebung genau einen höchsten Punkt auf.

Insbesondere kann die Erhebung mindestens einen höchsten Punkt haben, der auf einer Grenzlinie zwischen Plattformoberfläche und Druckseite des ersten Schaufelblattes oder auf einer Grenzlinie zwischen Plattformoberfläche und Saugseite des zweiten Schaufelblattes liegt. In einer Umgebung eines derartigen Punktes bzw. derartiger Punkte kann die Plattformoberfläche jeweils konvex oder konkav geformt sein.

Gemäß einer vorteilhaften Ausführungsvariante der vorliegenden Erfindung weist die Plattformoberfläche außer der Erhebung noch mindestens eine Vertiefung auf. Vorzugsweise hat eine derartige Vertiefung mindestens einen tiefsten Punkt, der stromauf mindestens eines höchsten Punktes der Erhebung angeordnet ist. Insbesondere bevorzugt ist eine Ausführungsform, bei der eine solche Vertiefung vollständig stromauf der mindestens einen Erhebung angeordnet ist (so das also jeder Punkt der Vertiefung im Vergleich zu jedem Punkt der Erhebung stromauf liegt). Die Vertiefung kann beispielsweise vollständig in einer stromauf liegenden Hälfte des Schaufelzwischenstreifens liegen. In Umfangsrichtung kann sich die mindestens eine Vertiefung vorzugsweise um höchstens 60%, höchstens 40% oder sogar höchstens ein Drittel des Teilungsabstandes in den Schaufelzwischenstreifen hinein erstrecken. Sie kann beispielsweise von einer Nullhöhenlinie (oder sogar Nullhöhenfläche) begrenzt sein, die sich von einer ersten Stelle an der Saugseite des zweiten Schaufelblattes zu einer zweiten Stelle der Saugseite erstreckt, so dass also die Vertiefung zwischen der Saugseite und der Nullhöhenlinie (bzw. -fläche) eingefasst ist. Insbesondere kann die Vertiefung in einem an der Saugseite des zweiten Schaufelblattes liegenden Drittel des Schaufelzwischenstreifens (das sich also in Umfangsrichtung von der Saugseite über ein Drittel des Teilungsabstandes erstreckt) angeordnet sein.

Als vorteilhaft hat sich eine Ausführungsvariante erwiesen, bei der ein Abschnitt des zweiten Schaufelblatts (an dessen Saugseite) in der Vertiefung der Plattformoberfläche fußt (d.h. bei der mindestens ein Teil einer Grenzlinie zwischen Plattformoberfläche und der genannten Saugseite in dem besagten Abschnitt in der Vertiefung verläuft, so dass sich also der Abschnitt der Saugseite insbesondere aus der Vertiefung erhebt).

Mindestens ein tiefster Punkt einer Vertiefung liegt vorzugsweise in einem (in Umfangsrichtung gemessenen) Abstand von der Saugseite des zweiten Schaufelblattes, der nicht größer als 10% des Teilungsabstandes, oder sogar auf einer Grenzlinie zwischen dem zweiten Schaufelblatt und der Plattformoberfläche.

Bei einer bevorzugten Ausführungsform der vorliegenden Erfindung ist die Erhebung eine erste Erhebung und weist die Plattformoberfläche mindestens eine zweite Erhebung auf, die ganz oder teilweise stromauf der ersten Erhebung angeordnet ist. Insbesondere kann die zweite Erhebung mindestens einen höchsten Punkt aufweisen, der stromauf mindestens eines höchsten Punktes der ersten Erhebung angeordnet ist.

In Umfangsrichtung erstreckt sich eine derartige zweite Erhebung vorzugsweise von der Druckseite des ersten Schaufelblattes um höchstens 50% oder sogar höchstens ein Drittel des Teilungsabstandes in den Schaufelzwischenstreifen hinein. Sie kann beispielsweise von einer Nullhöhenlinie (oder sogar Nullhöhenfläche) begrenzt sein, die sich von einer ersten Stelle an der Druckseite des ersten Schaufelblattes zu einer zweiten Stelle der Druckseite erstreckt, so dass also die zweite Erhebung zwischen der Druckseite und der Nullhöhenlinie (bzw. -fläche) eingefasst ist.

Als vorteilhaft hat sich eine Ausführungsvariante erwiesen, bei der ein Abschnitt des ersten Schaufelblatts an dessen Druckseite auf der zweiten Erhebung der Plattformoberfläche fußt.

Mindestens ein höchster Punkt der zweiten Erhebung liegt vorzugsweise in einem (in Umfangsrichtung gemessenen) Abstand von der Druckseite des ersten Schaufelblattes, der nicht größer als 10% des Teilungsabstandes ist, oder sogar auf einer Grenzlinie zwischen dem ersten Schaufelblatt und der Plattformoberfläche.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: ein Schaufelgittersegment einer ersten exemplarischen Ausführungsform der vorliegenden Erfindung in Draufsicht;
- Figur 2:: ein Schaufelgittersegment einer zweiten exemplarischen Ausführungsform der vorliegenden Erfindung in Draufsicht;
- Figur 3:: ein Schaufelgittersegment einer dritten exemplarischen Ausführungsvariante der vorliegenden Erfindung in Draufsicht;
- Figur 4:: ein Schaufelgittersegment einer vierten exemplarischen Ausführungsvariante der vorliegenden Erfindung in Draufsicht; und
- Figur 5:: ein Schaufelgittersegment einer fünften exemplarischen Ausführungsvariante der vorliegenden Erfindung in Draufsicht;

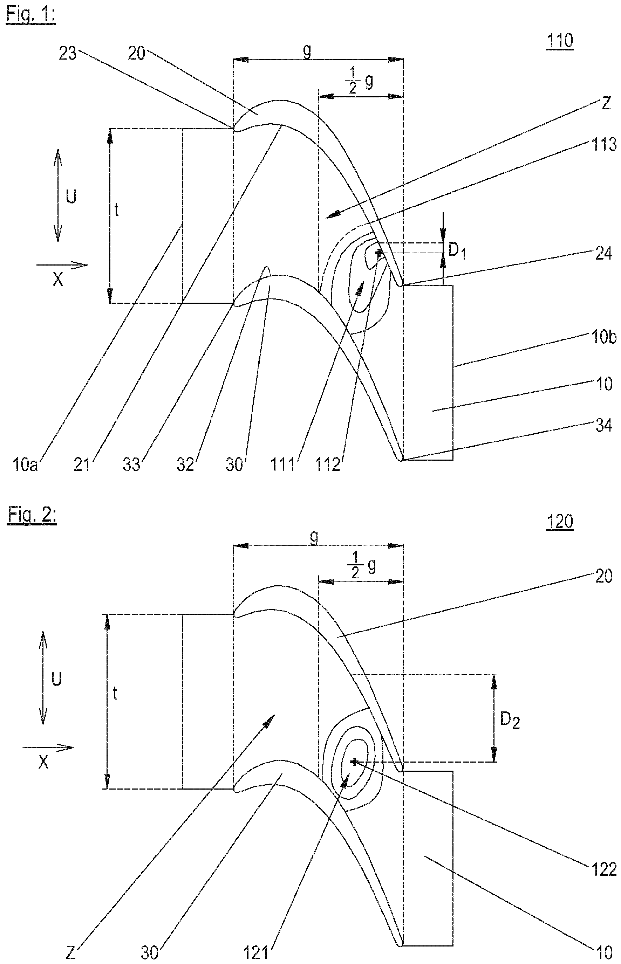

In Figur 1 ist in Draufsicht (mit radialer Blickrichtung) schematisch eine exemplarische, abgewickelte Ausführungsform eines erfindungsgemäßen Schaufelgittersegments 110 dargestellt. Es umfasst Schaufelblätter 20, 30, die jeweils eine Druckseite und eine Saugseite aufweisen, sowie eine erfindungsgemäße Plattform 10 mit einer (bezogen auf die vorgesehene axiale Hauptstromrichtung X) anströmseitigen Plattformkante 10a und einer abströmseitigen Plattformkante 10b. Die Plattform kann einteilig oder beispielsweise zweiteilig ausgebildet sein (nicht dargestellt), insbesondere kann sie zwei Teile umfassen, von denen jeweils eines der Schaufelblätter 20, 30 absteht.

Ein Schaufelzwischenstreifen Z erstreckt sich in Umfangsrichtung U von der Druckseite 21 eines ersten Schaufelblatts 20 zur Saugseite 32 des zweiten Schaufelblattes 30. In axialer Richtung X wird der Schaufelzwischenstreifen Z anströmseitig durch eine Verbindung der Anströmkanten 23, 33 der Schaufelblätter 20, 30 und abströmseitig durch eine Verbindung der jeweiligen Abströmkanten 24, 34 begrenzt; die Verbindungen verlaufen dabei auf der Plattformoberfläche rein in Umfangsrichtung (also ohne Abweichung in axialer Richtung), und sie haben einen Abstand g voneinander, welcher der axialen Gitterbreite g des Schaufelzwischenstreifens entspricht. Ein Teilungsabstand t ist als der Abstand der Anströmkanten 23, 33 voneinander an der Plattformoberfläche definiert.

Die Plattformoberfläche weist eine in der Figur 1 durch Höhenlinien verdeutlichte Erhebung 111 mit einem höchsten Punkt 112 auf, die sich von der Druckseite 21 des ersten Schaufelblattes 20 bis zur Saugseite 32 des zweiten Schaufelblattes erstreckt. Die Erhebung 111 liegt vollständig innerhalbeiner stromab liegenden Hälfte des Schaufelzwischenstreifens Z, also in einem Teilstreifen, der sich um die halbe axiale Gitterbreite stromaufwärts der Abströmkanten 24, 34 der Schaufelblätter 20, 30 erstreckt. Stromaufwärts wird die Erhebung 111 durch eine Kurve 113 begrenzt, die ebenfalls in der stromab liegenden Hälfte des Schaufelzwischenstreifens von der Druckseite 21 des ersten Schaufelblattes 20 bis zur Saugseite 32 des zweiten Schaufelblattes 30 reicht und eine Nullhöhe hat. Der stromauf der Kurve 113 liegende Bereich der Plattformoberfläche ist vorzugsweise vollständig eine Nullhöhenfläche, insbesondere ist die Plattformoberfläche dort in diesem Beispiel unkonturiert.

Wie aus den Höhenlinien ersichtlich ist, fußen sowohl das erste Schaufelblatt 20 an seiner Druckseite 21 als auch das zweite Schaufelblatt 30 an seiner Saugseite 32 in einem jeweiligen Abschnitt auf der Erhebung 111.

In Umfangsrichtung U gemessen hat der höchste Punkt 112 der Erhebung 111 bei dem in Figur 1 gezeigten Schaufelgittersegment 110 einen Abstand D₁ von der Druckseite 21 der ersten Schaufel 20, wobei D₁ ≤ t/10 gilt. Der Abstand beträgt somit bei dieser Ausführungsform höchstens 10% des Teilungsabstandes t. In anderen Ausführungsformen kann dieser Abstand D₁ auch höchstens 25% des Teilungsabstandes t betragen.

Demgegenüber hat eine Erhebung 121 eines in Figur 2 gezeigten, alternativen Ausführungsbeispiels für ein Schaufelgittersegment 120 einen höchsten Punkt 122, der in Umfangsrichtung U in einem mittleren Bereich des Schaufelzwischenstreifens Z liegt: In Umfangsrichtung U hat der höchste Punkt 122 einen Abstand D₂ von der Druckseite 21 der ersten Schaufel hat. Dabei gilt 0,4 t ≤ D₂ ≤ 0,6 t.

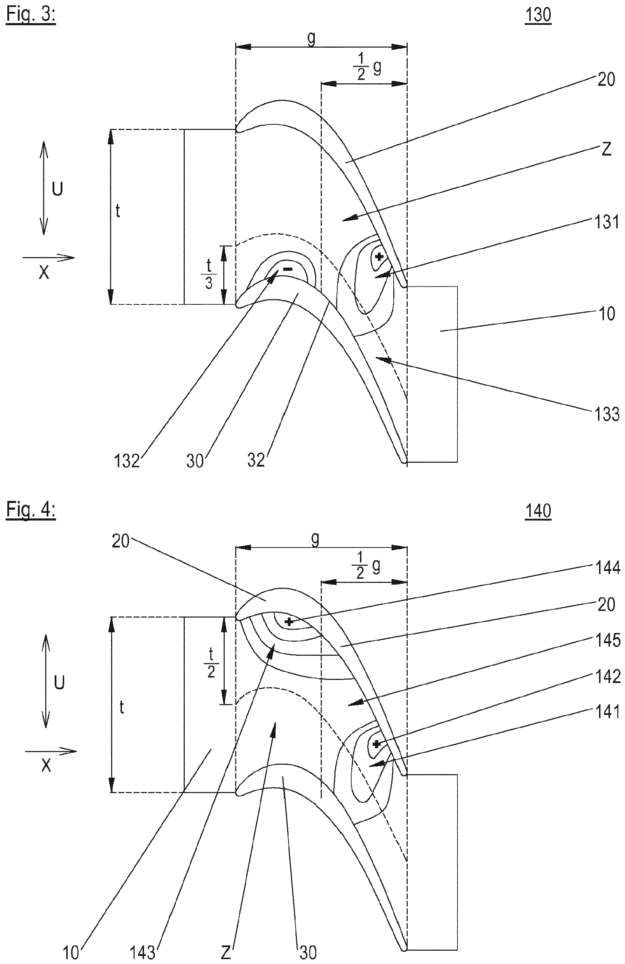

In Figur 3 ist ein Ausführungsbeispiel für ein erfindungsgemäßes Schaufelgittersegment 130 dargestellt, bei dem die Plattform neben einer Erhebung 131 eine Vertiefung 132 aufweist. Die Erhebung 131 ist vorliegend wie im in Figur 1 gezeigten Beispiel ausgebildet und wird daher nicht nochmals näher beschrieben; es versteht sich, dass beispielsweise auch eine Erhebung, wie sie in Figur 2 gezeigt ist, zusammen mit einer Vertiefung in der Plattformoberfläche eines erfindungsgemäßen Schaufelgittersegments angeordnet sein kann.

Die Vertiefung 132 ist vollständig stromauf der Erhebung 131 angeordnet, und zwar im gezeigten Beispiel in einem an der Saugseite 32 des zweiten Schaufelblattes 30 liegenden Drittel 133 des Schaufelzwischenstreifens Z (das sich also in Umfangsrichtung von der Saugseite über ein Drittel des Teilungsabstandes erstreckt). Das zweite Schaufelblatt 30 fußt (an seiner Saugseite) in einer stromauf liegenden Hälfte teilweise in der Vertiefung 132.

Bei der in der Figur 4 gezeigte Variante eines erfindungsgemäßen Schaufelgittersegments 140 weist Plattformoberfläche eine erste Erhebung 141 und darüber hinaus eine zweite Erhebung 143 auf. Die erste Erhebung 141 ist vorliegend wiederum wie im in Figur 1 gezeigten Beispiel ausgebildet und wird daher nicht nochmals näher beschrieben; es versteht sich, dass auch eine andere Erhebung, beispielsweise eine wie sie in Figur 2 gezeigt ist, zusammen mit einer zweiten Erhebung in der Plattformoberfläche eines erfindungsgemäßen Schaufelgittersegments angeordnet sein kann.

Die zweite Erhebung ist in einer an der Druckseite 21 des ersten Schaufelblattes liegenden Hälfte 145 des Schaufelzwischenstreifens Z angeordnet (die sich also in Umfangsrichtung von der Druckseite 21 über die Hälfte des Teilungsabstandes t erstreckt). In einer stromauf liegenden Hälfte des Schaufelzwischenstreifens Z fußt das erste Schaufelblatt 20 (an seiner Druckseite) teilweise auf der zweiten Erhebung 143.

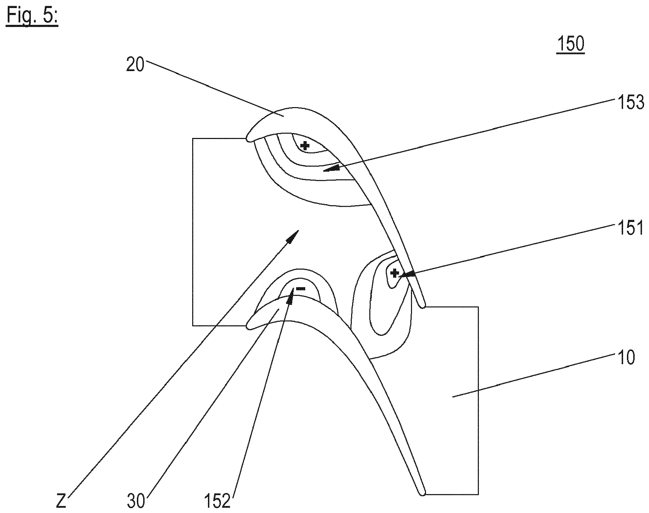

Figur 5 zeigt eine weitere exemplarische Ausführungsform eines erfindungsgemäßen Schaufelgittersegments 150. Dieses weist eine erste Erhebung 151, eine zweite Erhebung 153 und eine Vertiefung 152 auf, die im gezeigten Beispiel analog zu den in den Figuren 3 und 4 gezeigten Ausführungsbeispielen ausgebildet sind. Die speziellen Eigenschaften sind daher entsprechend wie oben beschrieben; auf die die Abmessungen betreffenden (gestrichelten) Hilfslinien wurde dabei in der Figur 5 verzichtet. Wiederum versteht sich, dass die Figur lediglich exemplarische Ausbildungen der Erhebungen und der Vertiefungen zeigt.

Offenbart wird ein Schaufelgittersegment 110, 120, 130, 140, 150 eines Schaufelgitters für eine Turbine, das eine Plattform 10 mit einer Plattformoberfläche sowie mindestens zwei Schaufelblätter 20, 30 umfasst. Die Schaufelblätter bestimmen dabei durch ihre jeweiligen An- und Abströmkanten 23, 33, 24, 34 auf einer Plattformoberfläche einen Schaufelzwischenstreifen Z mit axialer Gitterbreite g. In einer stromab liegenden Hälfte des Schaufelzwischenstreifens Z weist die Plattformoberfläche eine Erhebung 111, 121, 131, 141, 151 auf, die sich von der Druckseite 21 eines ersten der Schaufelblätter 20 bis zur Saugseite 32 eines zweiten der Schaufelblätter 30 erstreckt.

Offenbart sind ferner ein Schaufelgitter, ein Schaufelkanal, eine Niederdruckturbine und ein Flugzeugtriebwerk.

### Bezugszeichen

- 110, 120, 130, 140, 150: Schaufelgittersegment

- 10: Plattform
- 10a: anströmseitige Plattformkante
- 10b: abströmseitige Plattformkante
- 20, 30: Schaufelblatt
- 21: Druckseite des ersten Schaufelblatts 20
- 23, 33: Anströmkante
- 24, 34: Abströmkante
- 32: Saugseite des zweiten Schaufelblatts 30

- 111, 121, 131, 141, 143, 151, 153: Erhebung
- 113: auf Nullhöhe liegende Kurve
- 112, 122, 142: höchster Punkt der Erhebung
- 132, 152: Vertiefung
- 133: an der Saugseite des zweiten Schaufelblattes liegendes Drittel des Schaufelzwischenstreifens Z
- 145: an der Druckseite des ersten Schaufelblattes liegende Hälfte des Schaufelzwischenstreifens Z

- g: axiale Gitterbreite
- t: Teilung sab stand

- D₁, D₂: in Umfangsrichtung gemessener Abstand des höchsten Punktes von der Druckseite des ersten Schaufelblattes
- U: Umfangsrichtung
- X: vorgesehene axiale Hauptstromrichtung
- Z: Schaufelzwischenstreifen

## Patentansprüche

1. Schaufelgittersegment (110, 120, 130, 140, 150) eines Schaufelgitters für eine Turbine, wobei das Schaufelgittersegment eine Plattform (10) mit einer Plattformoberfläche sowie mindestens zwei Schaufelblätter (20, 30) umfasst, die durch ihre jeweiligen An- und Abströmkanten (23, 33, 24, 34) auf einer Plattformoberfläche einen Schaufelzwischenstreifen (Z) mit axialer Gitterbreite (g) bestimmen,
wobei die Plattformoberfläche eine Erhebung (111, 121, 131, 141, 151) aufweist, die sich in einer stromab liegenden Hälfte des Schaufelzwischenstreifens (Z) von der Druckseite (21) eines ersten der Schaufelblätter (20) bis zur Saugseite eines zweiten der Schaufelblätter (30) erstreckt.

2. Schaufelgittersegment nach Anspruch 1, wobei die Erhebung
- mindestens einen höchsten Punkt aufweist, dessen in Umfangsrichtung (U) gemessener Abstand (D₁) von der Druckseite (21) des ersten Schaufelblattes (20) höchstens 25%, insbesondere höchstens 10%, eines Teilungsabstandes (t) des Schaufelgittersegments beträgt; und/oder
- mindestens einen höchsten Punkt aufweist, dessen in Umfangsrichtung (U) gemessener Abstand von der Druckseite (21) des ersten Schaufelblattes (20) wenigstens 75%, insbesondere wenigstens 90%, des Teilungsabstandes (t) des Schaufelgittersegments beträgt; und/oder
- mindestens einen höchsten Punkt aufweist, dessen in Umfangsrichtung (U) gemessener Abstand (D₂) von der Druckseite (21) des ersten Schaufelblattes (20) zwischen 40% und 60% des Teilungsabstandes (t) des Schaufelgittersegments beträgt.

3. Schaufelgittersegment nach einem der Ansprüche 1 oder 2, wobei die Plattformoberfläche eine Vertiefung (132, 152) aufweist, die ganz oder teilweise stromauf der Erhebung (111, 121, 131, 141, 151) angeordnet ist.

4. Schaufelgittersegment nach Anspruch 3, wobei ein Abschnitt des zweiten Schaufelblatts (30) an dessen Saugseite (32) in der Vertiefung (132, 152) fußt.

5. Schaufelgittersegment nach einem der vorhergehenden Ansprüche, wobei die Erhebung (111, 121, 131, 141, 151) eine erste Erhebung ist und die Plattformoberfläche mindestens eine zweite Erhebung (143, 153) aufweist, die ganz oder teilweise stromauf der ersten Erhebung angeordnet ist.

6. Schaufelgittersegment nach Anspruch 5, wobei ein Abschnitt des ersten Schaufelblatts (20) an dessen Druckseite (21) auf der zweiten Erhebung (143, 153) fußt.

7. Schaufelgitter für eine Turbine, das mindestens ein Schaufelgittersegment (110, 120, 130, 140, 150) nach einem der vorangehenden Ansprüche umfasst.

8. Schaufelkanal einer Turbine, der durch ein Schaufelgittersegment (110, 120, 130, 140, 150) nach einem Ansprüche 1 bis 10 sowie durch eine der Plattform (10) des Schaufelgittersegments gegenüberliegende Seitenwand begrenzt ist.

9. Plattform (10) für ein Schaufelgittersegment (110, 120, 130, 140, 150) gemäß einem der Ansprüche 1 bis 6, wobei die Plattform dazu eingerichtet ist, in Umfangsrichtung (U) an die mindestens zwei Schaufelblätter (20, 30) anzugrenzen.

10. Turbine mit mindestens einem Schaufelgitter gemäß Anspruch 7.

11. Flugzeugtriebwerk mit einer Turbine gemäß Anspruch 10.
